(19) Europäisches Patentamt
European Patent Office
Office européen des brevets

(11) **EP 1 680 373 B1**

(12) **FASCICULE DE BREVET EUROPEEN**

(45) Date de publication et mention de la délivrance du brevet:
**13.12.2017 Bulletin 2017/50**

(51) Int Cl.:
*C03C 23/00* (2006.01)   *F24C 15/04* (2006.01)
*C03C 13/00* (2006.01)   *C03C 21/00* (2006.01)

(21) Numéro de dépôt: **04805729.3**

(22) Date de dépôt: **05.10.2004**

(86) Numéro de dépôt international:
**PCT/FR2004/050486**

(87) Numéro de publication internationale:
**WO 2005/042428 (12.05.2005 Gazette 2005/19)**

(54) **VITRE TREMPEE POUR ISOLATION THERMIQUE**

VORGESPANNTES GLAS FÜR DIE WÄRMEISOLIERUNG

TEMPERED GLASS FOR THERMAL INSULATION

(84) Etats contractants désignés:
**AT BE BG CH CY CZ DE DK EE ES FI FR GB GR HU IE IT LI LU MC NL PL PT RO SE SI SK TR**

(30) Priorité: **29.10.2003 FR 0312648**
**22.01.2004 FR 0400596**

(43) Date de publication de la demande:
**19.07.2006 Bulletin 2006/29**

(73) Titulaire: **SAINT-GOBAIN GLASS FRANCE**
**92400 Courbevoie (FR)**

(72) Inventeur: **MARANDON, Franck**
**75019 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
**EP-A- 1 038 845        WO-A-01/38249**
**DE-A- 3 608 967        DE-A- 4 206 268**
**US-A- 3 356 477        US-A- 4 671 814**
**US-A1- 2001 049 327    US-B1- 6 172 817**

## Description

L'invention concerne un verre ou une vitre ayant subi une trempe chimique utilisable notamment dans le domaine de la cuisson domestique, en tant que porte de four (plus particulièrement fours dits « à pyrolyse »), poêle, cuisinière, pare-feu, insert de cheminée et plus généralement pour séparer deux atmosphères gazeuses aux températures différentes.

Le verre utilisé dans le domaine qui vient d'être décrit doit généralement pouvoir :

- résister à des températures élevées, notamment jusqu'à 530°C, le plus longtemps possible,
- résister à ce qu'une atmosphère chaude (notamment jusqu'à 530°C) se trouve d'un côté de la vitre alors qu'une atmosphère froide (notamment la température ambiante, c'est-à-dire généralement de 18 à 40°C) se trouve de l'autre côté,
- résister aux chocs thermiques tels que ceux décrits dans la norme EN60335-2-6, et notamment celui créé par une aspersion d'eau froide (par exemple 20°C) sur l'une de ses faces principales alors même que l'autre face est en contact avec une atmosphère chaude (par exemple 530°C),
- résister aux chocs mécaniques,
- présenter une résistance mécanique suffisante compte tenu de son emploi, notamment lorsque l'on souhaite pouvoir utiliser la vitre comme porte sans utilisation d'un cadre pour la porter.

Cet ensemble de propriétés peut au moins en partie être apporté ou approché par des compositions particulières de verre ou céramique comme certains verres borosilicatés où certaines vitrocéramiques. Cependant ces compositions particulières présentent des coûts élevés.

Les verres trempés thermiquement ou chimiquement apportent une bonne résistance mécanique mais ils sont réputés se relaxer rapidement, ce qui signifie que l'avantage conféré par la trempe est trop vite perdu compte tenu des applications visées. De plus, la trempe chimique de certains verres est difficile à réaliser et non réellement envisagée compte tenu du faible coefficient de diffusion des ions concernés par la trempe chimique.

Le document US 2001/049327 A1 enseigne un verre trempé chimiquement pour tube à rayons cathodiques. Il décrit dans son Exemple 7 un verre présentant une épaisseur en compression (thickness of stress-strain layer) de 100 $\mu$m, une contrainte de surface (compressive stress) de 200 MPa et un strain point de 560°C. Selon l'invention, un verre (ou une vitre) particulier ayant subi une trempe chimique suffisamment prononcée de façon à ce que la profondeur d'échange ionique (ions alcalins) soit d'au moins 100 $\mu$m et de façon à ce que la contrainte de surface soit d'au moins 200 MPa, convient dans le cadre des applications sus-mentionnées. Dans le cadre de l'invention, le verre de départ, c'est-à-dire avant la trempe chimique, doit présenter les caractéristiques suivantes :

- un point de viscosité (« strain point » en anglais, ce qui correspond à la température à laquelle la viscosité du verre est de $10^{14,5}$ poises) d'au moins 550°C et de préférence d'au moins 570°C
- un coefficient d'interdiffusion des ions alcalins échangés à 400°C d'au plus $9.10^{-17}$ m$^2$.s$^{-1}$, - de préférence un rapport du coefficient d'interdiffusion à 490°C des ions alcalins échangés sur le coefficient d'interdiffusion à 400°C des ions alcalins échangés d'au moins 20.

L'invention fait donc appel à un verre présentant un faible coefficient d'interdiffusion à 400°C des ions échangés. Selon l'invention, on peut même utiliser un verre présentant un faible coefficient d'interdiffusion à 490°C des ions échangés, notamment un verre dont le coefficient d'interdiffusion à 490°C des ions échangés est inférieur à $2,10^{-15}$ m$^2$.s$^{-1}$. De ce point de vue, l'invention va à contre-courant dans le domaine de la trempe chimique puisqu'elle fait appel à un verre présentant un faible coefficient d'interdiffusion des ions, ce qui traduit une faible aptitude à la trempe chimique, pour néanmoins le tremper chimiquement.

L'opération de trempe chimique est en elle-même connue dans son principe. On peut appliquer une technique de trempe chimique classique à l'invention en l'adaptant du fait que l'on utilise un verre au départ peu apte à la trempe chimique, et d'autre part en la menant suffisamment longtemps pour que les valeurs souhaitées de profondeur d'échange ionique et de contrainte de surface soient obtenues.

La trempe chimique modifie la surface du verre. Cependant le coeur reste inchangé, de sorte qu'après la trempe chimique, le point de viscosité à coeur est celui du verre avant la trempe chimique.

Avant le traitement par trempe chimique, le verre de départ doit contenir un oxyde d'alcalin. Cet oxyde peut être Na$_2$O ou Li$_2$O, et être présent dans le verre à raison par exemple de 1 à 20% en poids. Le traitement de trempe chimique consiste à remplacer des ions alcalins initialement dans le verre par d'autres ions alcalins plus gros. Si l'oxyde initial est Na$_2$O, on applique une trempe chimique par traitement au KNO$_3$, de façon à remplacer au moins partiellement des ions Na$^+$ par des ions K$^+$. Si l'oxyde initial est Li$_2$O, on appliquer une trempe chimique par traitement au NaNO$_3$ ou au KNO$_3$, de façon à remplacer au moins partiellement des ions Li$^+$ suivant le cas par des ions Na$^+$ où K$^+$. La trempe mène à un gradient de concentration en ions K$^+$ ou Na$^+$ perpendiculairement à au moins l'une des faces principales et décroissant à partir de ladite face principale.

Le verre de départ (avant trempe chimique) et le verre final (après trempe chimique) sont des verres minéraux à base de silice.

Le verre final est alcali-mixte, c'est-à-dire comprenant au moins deux oxydes d'alcalin différents (notamment du fait de la trempe chimique qu'il a subi). Il contient en général 50 à 80% de silice SiO$_2$. Il contient en général 5 à 30% d'oxyde d'alcalin de formule M$_2$O dans laquelle M est un alcalin comme Na, K ou Li. Avant la trempe chimique, le verre utilisé comprend la même quantité de silice et sensiblement la même quantité totale d'oxyde d'alcalin, la différence avec le verre final étant que le verre de départ peut ne contenir qu'un seul oxyde d'alcalin. La trempe chimique produit un échange en ions alcalins; sans modifier la teneur totale molaire en oxyde d'alcalin.

Généralement, la trempe chimique est réalisée en plongeant le vitrage à traiter dans un bain chaud du sel choisi (généralement NaNO$_3$ ou KNO$_3$). Ce bain contient le sel concentré. La trempe chimique est généralement réalisée entre 380°C et 520°C, et de toute manière à une température inférieure à la température de ramollissement du verre à traiter. La trempe chimique produit un échange d'ions à la surface du verre traité sur une profondeur pouvant aller par exemple jusqu'à 300 μm. Cet échange d'ion est à l'origine de gradients de concentration en ion alcalin. Généralement ce gradient se caractérise par une diminution de la concentration en ions apportés par la trempe chimique (généralement K$^+$ ou Na$^+$) à partir de la face principale et en direction du coeur du vitrage. Ce gradient existe entre la surface et par exemple une profondeur d'au plus 300 μm.

La profondeur d'échange en ions P$_e$ peut être déterminée

a) soit par $$P_e = \frac{\sqrt{\pi} \times Mv \times ev \times \Delta m}{32 \times a \times mi}$$

dans laquelle

*a* représente le % molaire d'oxyde alcalin initial dans le verre (par exemple Na$_2$O ou Li$_2$O),
*mi* représente la masse totale initiale (avant trempe) du verre en grammes,
*Mv* représente la masse molaire du verre en g/mole,
Δm représente la prise de poids du verre pendant la trempe en grammes,
*ev* représente l'épaisseur du verre en micromètres,
P$_e$ étant ainsi obtenu en micromètres,

b) soit par un profil microsonde auquel cas elle est définie par la profondeur pour laquelle la teneur en ions apportés par la trempe est égale à celle de la matrice verrière à 0,5% près.

On note par ailleurs que la trempe chimique confère à la vitre une résistance mécanique améliorée. Ceci la rend particulièrement apte à être utilisée avec des charnières (en tant que porte) directement intégrées dans la vitre, sans besoin d'un cadre porteur. On peut cependant prévoir de protéger tout de même les bords de la vitre contre les chocs mécaniques, par exemple par un joint (non nécessairement porteur) en métal comme en aluminium ou en acier inoxydable. Un tel joint est placé en bordure de la vitre.

Le verre ou la vitre selon l'invention trouve une utilisation notamment comme paroi externe (généralement faisant partie d'une porte) de four à pyrolyse ou poêle ou insert de cheminée. Dans le cas d'un four à pyrolyse, la vitre fait généralement partie d'une paroi (ce qui inclut les portes) comprenant au moins deux vitres parallèles et généralement au plus cinq vitres parallèles, et dans la plupart des cas trois vitres parallèles, lesdites vitres parallèles étant séparées par une lame d'air. La paroi comprenant la vitre selon l'invention peut être au moins l'une d'elles et plus particulièrement celle en contact direct avec l'atmosphère interne du four, laquelle peut être portée entre 460 et 530°C. La paroi comprenant la vitre selon l'invention peut séparer l'intérieur du four à pyrolyse dont l'atmosphère est généralement portée à une température allant de 460 à 530°C, de l'extérieur du four en contact avec l'air ambiant. Dans le cas des poêles et inserts de cheminée, la vitre est généralement seule pour isoler l'intérieur du poêle ou de la cheminée de l'atmosphère de la pièce. Dans ce cas, la vitre selon l'invention réalise elle-même une séparation entre une atmosphère chaude portée à une température allant de 300 à 530°C et une atmosphère froide constituée par l'air ambiant d'une pièce. On considère dans le cadre de la présente demande que l'air ambiant est à la température moyenne d'une pièce portée entre 18 et 40°C, notamment environ 20°C.

Compte tenu de l'utilisation envisagée, la vitre selon l'invention peut notamment généralement supporter au moins l'une des conditions suivantes sans se casser :

- a) chauffe à 500°C dans l'air au moins 300 heures, suivie d'une chauffe à 300°C pendant 1 heure, suivie immédiatement (ce qui signifie qu'on ne laisse pas la vitre se refroidir) d'une aspersion d'eau à 20°C,
- b) à 400°C dans l'air au moins 3 ans, suivi immédiatement (ce qui signifie qu'on ne laisse pas la vitre se refroidir) d'une aspersion d'eau à 20°C d'un côté de la vitre,

- c) l'une des faces principales étant en contact avec une première atmosphère gazeuse (neutre chimiquement vis-à-vis de la vitre, comme notamment de l'air) à une température allant de 350 à 530°C, l'autre face étant en contact avec une seconde atmosphère gazeuse (neutre chimiquement vis-à-vis de la vitre, comme notamment de l'air) à une température inférieure d'au moins 50°C, voire d'au moins 100°C par rapport à la température de la première atmosphère gazeuse, ces conditions étant maintenues pendant au moins 2 heures et suivies d'une aspersion immédiate d'eau à 20°C sur le côté ayant été en contact avec l'atmosphère la plus chaude. La température de la seconde atmosphère gazeuse peut être celle de l'air ambiant d'une pièce.
- d) dans un vitrage comprenant plusieurs vitres parallèles (par exemple 2 ou 3 ou 4 ou 5 vitres), la vitre selon l'invention étant en association avec d'autres vitres parallèles à elle, les différentes vitres étant séparées par des lames d'air, et ce de façon à ce que ledit vitrage sépare une première atmosphère (neutre chimiquement vis-à-vis de la vitre, comme notamment de l'air) à une température allant de 350 à 530°C, d'une seconde atmosphère gazeuse (neutre chimiquement vis-à-vis de la vitre, comme notamment de l'air) à une température inférieure d'au moins 50°C, voire d'au moins 100°C par rapport à la température de la première atmosphère gazeuse, ces conditions étant maintenues pendant au moins 2 heures et suivies d'une aspersion immédiate d'eau à 20°C sur le côté ayant été en contact avec l'atmosphère la plus chaude. Dans cette application, la vitre selon l'invention peut se trouver en contact avec l'atmosphère la plus chaude. Dans cette application, toutes les vitres peuvent être selon l'invention. La température de la seconde atmosphère gazeuse peut être celle de l'air ambiant d'une pièce.

La vitre selon l'invention peut avoir une épaisseur allant de 2 à 7 mm. L'invention est plus particulièrement applicable aux vitres ayant une épaisseur allant de 2,8 à 5 mm, notamment environ 3 mm. La vitre est généralement plane.

Le verre ou la vitre selon l'invention peut être compris(e) dans une porte, notamment comprenant des charnières directement intégrées dans ladite vitre. Le verre ou la vitre ou la porte selon l'invention peut être compris(e) dans une cuisinière ou pare-feu ou insert de cheminée ou poêle ou four notamment du type à pyrolyse. De façon plus générale, le verre ou la vitre selon l'invention peut servir pour séparer deux atmosphères gazeuses aux températures différentes, la première étant à une température allant de 300 à 530°C, la seconde étant à une température inférieure d'au moins 50°C par rapport à la première, voire d'au moins 100°C par rapport à la première, voire à la température ambiante, et ce avec des risques atténués de casse grâce à la bonne résistance aux chocs thermiques.

L'aptitude d'une vitre à se prêter à l'usage visé par la présente invention peut notamment être déterminé en la soumettant à des cycles répétés de chauffage à 500°C ou 400°C suivi d'un choc thermique à 400°C par une aspersion d'eau à 20°C sur un côté de la vitre, jusqu'à rupture de la vitre. Plus la vitre supporte de cycles, plus elle est apte à l'usage visé. La vitre selon la présente invention peut supporter au moins 50 de ces cycles, voire au moins 100 cycles, voire au moins 200 cycles.

Lorsque la durée de telles déterminations est particulièrement long, on peut estimer la durée à partir d'un calcul fondé sur des mesures réalisées à plus haute température pour accélérer le test. Par exemple, on peut estimer une durée de tenue à 400°C à partir de tests réalisés à 500°C. Pour ce faire, l'inventeur a trouvé que l'on pouvait utiliser la formule suivante :

Durée estimée pour 400°C = Durée mesurée à 500°C . $CD_{500}/CD_{400}$ dans laquelle $CD_{500}$ est le coefficient d'interdiffusion à 500°C des ions alcalins échangés et $CD_{400}$ est le coefficient d'interdiffusion à 400°C des ions alcalins échangés. Cette approximation a été utilisée pour l'exemple 2.

Dans les exemples qui suivent, on a utilisé les appellations ou abréviations suivantes :

- Pe : profondeur d'échange en ions alcalins suite à la trempe chimique,
- Cs : contrainte de surface,
- SP : point de viscosité,
- CD : coefficient d'interdiffusion des ions alcalins échangés,
- $CD_{490}$ : coefficient d'interdiffusion à 490°C des ions alcalins échangés,
- $CD_{400}$ : coefficient d'interdiffusion à 400°C des ions alcalins échangés,
- Tt : Température de la trempe chimique
- Dt : durée de la trempe chimique
- nbre cycles : nombre de cycles 500°C/aspersion d'eau à 20°C pour obtenir la rupture de la vitre.

Pour les exemples, on a utilisé les techniques de mesure suivantes :

- profondeur d'échange : mesure par prise de poids (équation a), avant et après trempe chimique
- contrainte de surface : mesure par stratoréfractomètre (appareil notamment décrit dans la thèse de C. Guillemet «Thèse de Docteur Ingénieur », Faculté des sciences, Paris (1968)).

## **EXEMPLES**

On a utilisé les verres de marque Solidion, Planilux et CS77 commercialisés par Saint-Gobain Glass France.

Le Tableau 1 donne les valeurs de point de viscosité SP (« Strain Point »), ainsi que les valeurs des coefficients d'interdiffusion CD de ces verres pour les températures utilisées dans les exemples.

**Tableau 1**

| | SP | CD |
|---|---|---|
| Solidion | 500°C | à 400°C : $4,5.10^{-15}$ $m^2.s^{-1}$<br>à 460°C: $2,3.10^{-14}$ $m^2.s^{-1}$<br>à 490°C : $4,5.10^{-14}$ $m^2.s^{-1}$<br>à 500°C : $5,8.10^{-14}$ $m^2.s^{-1}$ |
| Planilux | 505°C | à 400°C : $1,0.10^{-10}$ $m^2.s^{-1}$<br>à 460°C : $1,3.10^{-15}$ $m^2.s^{-1}$<br>à 490°C : $3,4.10^{-15}$ $m^2.s^{-1}$<br>à 500°C : $4,5.10^{-15}$ $m^2.s^{-1}$ |
| CS77 | 585°C | à 400°C : $3,8.10^{-11}$ $m^2.s^{-1}$<br>à 460°C : $4,3.10^{-16}$ $m^2.s^{-1}$<br>à 490°C : $9,35.10^{-16}$ $m^2.s^{-1}$<br>à 500°C : $1,4.10^{-15}$ $m^2.s^{-1}$ |

Préparation des échantillons pour les exemples :

On prend des vitres faites de chacun de ces verres, de dimension $300 \times 200 \times e$, e étant l'épaisseur des vitres testées. Les arêtes de ces vitres sont façonnées avec une bordeuse à bande de référence P180Y, commercialisée par 3M. On trempe les vitres dans un bain de $KNO_3$ porté à la température Tt, pendant une durée Dt. Ce traitement met la couche superficielle des verres en compression, ce qui les renforce.

Le taux de renforcement des vitres peut être caractérisé par la mesure de leur contrainte de compression de surface Cs, et de leur profondeur échangée Pe. Plus ces 2 paramètres sont élevés et plus le renforcement est important.

Toutes les vitres ont été trempées chimiquement de façon à obtenir une profondeur d'échange Pe égale à 150 $\mu$m pour chacune d'elles, ce qui correspond aux traitements indiqués dans les trois premières lignes du Tableau 2. Cs a été mesuré optiquement au réfractomètre et Pe a été mesuré par la différence de poids avant et poids avant et après trempe. Deux essais, CS77 (A) et CS77 (B) ont été réalisés avec le CS77 pour déterminer l'influence de la durée de la trempe chimique et donc de la profondeur d'échange.

**Tableau 2**

| | e | Tt | Dt | Cs | Pe |
|---|---|---|---|---|---|
| Solidion | 3 mm | 460°C | 17 heures | 450 MPa | 178 $\mu$m |
| Planilux | 2,8 mm | 460°C | 300 heures | 370 MPa | 180 $\mu$m |
| **CS77 (A)** | **2,8 mm** | **490°C** | **360 heures** | **350 MPa** | **176 $\mu$m** |
| CS77 (B) | 2,8 mm | 490°C | 24 heures | 345 Mpa | 45 $\mu$m |

A l'issu de ces traitements de trempe chimique, les vitres en CS77 sont donc les moins renforcées.

Exemple 1 : Poêle à 500°C puis 400°C

Les échantillons renforcés chimiquement sont ensuite soumis à une répétition des cycles suivants : chauffe à 500°C pendant 2 heures, suivie d'une chauffe à 400°C pendant une heure suivie immédiatement d'une aspersion d'eau froide (20°C) d'un côté de la vitre. Les cycles sont répétés jusqu'à rupture des vitres. Le Tableau 3 indique le nombre minimum de cycles que les vitres ont supportés avant casse.

**Tableau 3**

|  | Nombre de cycles |
| --- | --- |
| Solidion | 4 |
| Planilux | 7 |
| **CS77 (A)** | **250** |
| CS77 (B) | 35 |

Exemple 2 : Simulation d'un Poêle Domestique à 400°C

A partir des résultats de l'exemple précédent, on simule (utilisation de la formule précédemment donnée) le comportement des vitres équipant un poêle fonctionnant de manière continue à 400°C. Le Tableau 4 indique le temps minimum de chauffe à partir duquel se produisent des casses lorsque les vitres chaudes (400°C) sont aspergées d'eau froide (20°C).

**Tableau 4**

|  | temps de chauffe avant casse au choc thermique (estimation pour 400°C) |
| --- | --- |
| Solidion | 103 heures (soit 4,3 jours) |
| Planilux | 630 heures (soit 26 jours) |
| CS77 (A) | 18421 heures (soit 2,1 ans) |

**Revendications**

1. Verre présentant un gradient de concentration en ions alcalins à partir de sa surface sur une profondeur d'échange d'au moins 100 $\mu$m, une contrainte de surface d'au moins 200 MPa, un point de viscosité à coeur d'au moins 550°C, et un coefficient d'interdiffusion des ions alcalins échangés à 400°C d'au plus $9.10^{-17}$ $m^2.s^{-1}$.

2. Verre selon la revendication précédente, **caractérisé en ce que** le rapport du coefficient d'interdiffusion à 490°C des ions alcalins échangés sur le coefficient d'interdiffusion à 400°C des ions alcalins échangés est d'au moins 20.

3. Verre selon l'une des revendications précédentes, **caractérisé en ce que** le coefficient d'interdiffusion à 490°C des ions alcalins échangés est inférieur à $2.10^{-15}$ $m^2.s^{-1}$.

4. Verre selon l'une des revendications précédentes **caractérisé en ce que** le point de viscosité à coeur est d'au moins 570°C.

5. Verre selon l'une des revendications précédentes, **caractérisé en ce que** les ions d'échange sont choisis parmi $Na^+$, $Li^+$, $K^+$.

6. Verre selon l'une des revendications précédentes, **caractérisé en ce que** la profondeur d'échange des ions alcalins est au plus de 300 $\mu$m.

7. Verre selon l'une des revendications précédentes, **caractérisé en ce qu'**il est conforme à la norme EN60335-2-6.

8. Vitre comprenant le verre de l'une des revendications précédentes.

9. Vitre selon la revendication précédente **caractérisé en ce que** son épaisseur va de 2 à 7 mm.

10. Vitre selon la revendication précédente **caractérisé en ce que** son épaisseur va de 2,8 à 5 mm.

11. Porte comprenant le verre ou la vitre de l'une des revendications précédentes.

EP 1 680 373 B1

**12.** Porte selon la revendication précédente comprenant des charnières directement intégrées dans ladite vitre.

**13.** Porte selon l'une des revendications de porte précédentes, **caractérisé en ce que** la bordure de la vitre est protégée par un joint.

**14.** Cuisinière ou pare-feu ou insert de cheminée comprenant le verre ou la vitre ou la porte de l'une des revendications précédentes.

**15.** Four comprenant une porte de l'une des revendications de porte précédentes.

**16.** Four selon la revendication précédente, **caractérisé en ce qu'**il est du type à pyrolyse.

**17.** Poêle comprenant une porte de l'une des revendications de porte précédentes.

**18.** Utilisation d'une vitre selon l'une des revendications de vitre précédentes pour séparer deux atmosphères gazeuses aux températures différentes, la première étant à une température allant de 300 à 530°C, la seconde étant à une température inférieure d'au moins 50°C par rapport à la première.

**19.** Utilisation selon la revendication précédente, **caractérisé en ce que** la seconde est à une température inférieure d'au moins 100°C par rapport à la première.

**20.** Utilisation selon la revendication précédente, **caractérisé en ce que** la seconde atmosphère est à la température ambiante.

**Patentansprüche**

**1.** Glas mit einem Alkaliionenkonzentrationsgradienten von der Oberfläche bis zu einer Austauschtiefe von mindestens 100 $\mu$m, einer Oberflächenspannung von mindestens 200 MPa, einem Kernviskositätspunkt von mindestens 550°C und einem Interdiffusionskoeffizienten der bei 400°C ausgetauschten Alkaliionen von höchstens $9{,}10^{-17}$ m$^2$.s$^{-1}$.

**2.** Glas nach dem vorangehenden Anspruch, **dadurch gekennzeichnet, dass** das Verhältnis des Interdiffusionskoeffizienten der ausgetauschten Alkaliionen bei 490 °C zum Interdiffusionskoeffizienten der ausgetauschten Alkaliionen bei 400°C mindestens 20 beträgt.

**3.** Glas nach einem der vorangehenden Ansprüche, **dadurch gekennzeichnet, dass** der Interdiffusionskoeffizient der ausgetauschten Alkaliionen bei 490 °C unter $2{,}10^{-15}$ m$^2$.s$^{-1}$ liegt.

**4.** Glas nach einem der vorangehenden Ansprüche, **dadurch gekennzeichnet, dass** der Kernviskositätspunkt mindestens 570 °C beträgt.

**5.** Glas nach einem der vorangehenden Ansprüche, **dadurch gekennzeichnet, dass** die Austauschionen aus Na$^+$, Li$^+$, K$^+$ ausgewählt sind.

**6.** Glas nach einem der vorangehenden Ansprüche, **dadurch gekennzeichnet, dass** die Austauschtiefe der Alkaliionen höchstens 300 $\mu$m beträgt.

**7.** Glas nach einem der vorangehenden Ansprüche, **dadurch gekennzeichnet, dass** es der DIN-Norm EN 60335-2-6 entspricht.

**8.** Glasscheibe, die das Glas nach einem der vorangehenden Ansprüche umfasst.

**9.** Glasscheibe nach dem vorangehenden Anspruch, **dadurch gekennzeichnet, dass** ihre Dicke 2 bis 7 mm beträgt.

**10.** Glasscheibe nach dem vorangehenden Anspruch, **dadurch gekennzeichnet, dass** ihre Dicke 2,8 bis 5 mm beträgt.

**11.** Tür, die das Glas oder die Glasscheibe nach einem der vorangehenden Ansprüche umfasst.

**12.** Tür nach dem vorangehenden Anspruch, die direkt in die Glasscheibe eingelassene Scharniere umfasst.

**13.** Tür nach einem der vorangehenden Türansprüche, **dadurch gekennzeichnet, dass** der Rand der Glasscheibe durch eine Dichtung geschützt ist.

**14.** Herd oder Brandschutzvorrichtung oder Kamineinsatz, die das Glas oder die Glasscheibe oder die Tür nach einem der vorangehenden Ansprüche umfassen.

**15.** Backofen, der eine Tür nach einem der vorangehenden Türansprüche umfasst.

**16.** Backofen nach dem vorangehenden Anspruch, **dadurch gekennzeichnet, dass** es sich bei dem Backofen um einen Pyrolyseofen handelt.

**17.** Ofen, der eine Tür nach einem der vorangehenden Türansprüche umfasst.

**18.** Verwendung einer Glasscheibe nach einem der vorangehenden Glasscheibenansprüche, um zwei Gasatmosphären mit unterschiedlichen Temperaturen zu trennen, wobei die erste Gasatmosphäre eine Temperatur von 300 bis 530 °C aufweist, wobei die zweite Gasatmosphäre im Verhältnis zur ersten Gasatmosphäre eine um mindestens 50 °C niedrigere Temperatur aufweist.

**19.** Verwendung nach dem vorangehenden Anspruch, **dadurch gekennzeichnet, dass** die zweite Gasatmosphäre im Verhältnis zur ersten Gasatmosphäre eine um mindestens 100 °C niedrigere Temperatur aufweist.

**20.** Verwendung nach dem vorangehenden Anspruch, **dadurch gekennzeichnet, dass** die zweite Gasatmosphäre bei Raumtemperatur liegt.


**Claims**

**1.** A glass having an alkali-metal-ion concentration gradient from its surface over an exchange depth of at least 100 $\mu$m, a surface stress of at least 200 MPa and a strain point in the core of at least 550°C, and an interdiffusion coefficient at 400°C of the alkali metal ions exchanged of at most $9 \times 10^{-17}$ m$^2$.s$^{-1}$.

**2.** The glass as claimed in one of the preceding claims, **characterized in that** the ratio of the interdiffusion coefficient at 490°C of the exchanged alkali metal ions to the interdiffusion coefficient at 400°C of the exchanged alkali metal ions is at least 20.

**3.** The glass as claimed in one of the preceding claims, **characterized in that** the interdiffusion coefficient at 490°C of the exchanged alkali metal ions is less than $2 \times 10^{-15}$ m$^2$.s$^{-1}$.

**4.** The glass as claimed in one of the preceding claims, **characterized in that** the strain point in the core is at least 570°C.

**5.** The glass as claimed in one of the preceding claims, **characterized in that** the exchange ions are chosen from Na$^+$, Li$^+$, K$^+$.

**6.** The glass as claimed in one of the preceding claims, **characterized in that** the depth of alkali metal ion exchange is at most 300 $\mu$m.

**7.** The glass as claimed in one of the preceding claims, **characterized in that** it meets the EN 60335-2-6 standard.

**8.** A pane comprising the glass of one of the preceding claims.

**9.** The pane as claimed in the preceding claim, **characterized in that** its thickness ranges from 2 to 7 mm.

**10.** The pane as claimed in the preceding claim, **characterized in that** its thickness ranges from 2.8 to 5 mm.

**11.** A door comprising the glass or the pane of one of the preceding claims.

**12.** The door as claimed in the preceding claim, comprising hinges directly incorporated into said pane.

**13.** The door as claimed in one of the preceding door claims, **characterized in that** the border of the pane is protected by a seal.

**14.** A cooker or fire screen or flue insert, comprising the glass or the pane or the door of one of the preceding claims.

**15.** An oven comprising a door of one of the preceding door claims.

**16.** The oven as claimed in the preceding claim, **characterized in that** it is of the pyrolytic type.

**17.** A stove comprising a door of one of the preceding door claims.

**18.** The use of a pane as claimed in one of the preceding pane claims for separating two gaseous atmospheres at different temperatures, the first being at a temperature ranging from 300 to 530°C and the second being at a temperature at least 50°C below the first.

**19.** The use as claimed in the preceding claim, **characterized in that** the second gaseous atmosphere is at a temperature at least 100°C below the first.

**20.** The use as claimed in the preceding claim, **characterized in that** the second atmosphere is at room temperature.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2001049327 A1

**Littérature non-brevet citée dans la description**

- **C. GUILLEMET.** Thèse de Docteur Ingénieur. Faculté des sciences, 1968